# EUROPÄISCHE PATENTANMELDUNG

(11) **EP 2 028 589 A2**
(43) Veröffentlichungstag der Anmeldung: **25.02.2009**
(21) Anmeldenummer: 08001854.2
(22) Anmeldetag: 31.01.2008
(51) Int. Cl.: G06F 3/14, G09G 5/399

(54) **Mehrfachanzeigensystem**

(30) Priorität: 22.08.2007 DE 202007011738 U
(71) Anmelder: Data Display GmbH, 82110 Germering (DE)
(72) Erfinder: Staller, Berhard, 82275 Emmering (DE)
(74) Vertreter: Zimmermann, Tankred Klaus

(57) **Zusammenfassung**

Ein Mehrfachanzeigesystem umfasst eine Mehrzahl von Anzeigegeräten (14₁-14₆), wobei jedes der Mehrzahl von Anzeigegeräten (14₁-14₆) eine serielle Schnittstelle (20₁-20₆) zum Empfangen von Bilddaten umfasst, und wobei jedes der Mehrzahl von Anzeigegeräten (14₁-14₆) ausgebildet ist, um die Bilddaten anzuzeigen. Ferner ist eine Steuerung (100) mit einer seriellen Schnittstelle vorgesehen, wobei die Steuerung (100) ausgebildet ist, um die Bilddaten für jede der Mehrzahl von Anzeigegeräten (14₁-14₆) bereitzustellen. Ein serieller Bus (102, 106, 108₁-108₆) verbindet die seriellen Schnittstellen (20₁-20₆) der Anzeigegeräte (14₁-14₆) und die serielle Schnittstelle der Steuerung (100).

## Beschreibung

Die vorliegende Erfindung bezieht sich auf ein Mehrfachanzeigesystem.

Übliche Signalverarbeitungssysteme, wie z.B. PCs (Personalcomputer), PDAs (Persönliche Digitale Assistenten), Computer, Fertigungssteuerungen und medizinische Geräte, bewerkstelligen die Ansteuerung von Anzeigegeräten für Bilddaten mittels eines Graphikprozessors, der wiederum über ein Betriebssystem und den dazu passenden Treiber angesteuert wird. Der Anschluss eines TFT-LCD-Bildschirms (TFT = Thin Film Transistor = Dünnfilmtransistor, LCD = Liquid Crystal Display = Flüssigkristallanzeige) erfolgt über einen Graphikprozessor. Der Graphikprozessor wiederum wird über die in dem Signalverarbeitungssystem üblichen internen Busse, wie z. B. den PCI-Bus, angeschlossen. Meist befinden sich die Graphikprozessoren auf Graphikkarten. Es gibt aber auch Signalverarbeitungssysteme, in denen der Graphikprozessor anderweitig integriert ist. Gerade TFT-LCD-Bildschirme stellen bezüglich der Anschlüsse besondere Anforderungen an die Graphikkarten bzw. Graphikprozessoren. Um TFT-LCD-Bildschirme an Signalverarbeitungssystemen zu betreiben, ergibt sich für den Benutzer die Notwendigkeit, die Signalverarbeitungssysteme zu öffnen und, falls möglich, mit geeigneten Graphikprozessoren auszustatten. Es gibt zwar technische Möglichkeiten, die Busse nach außen zu führen, das technische Prinzip bleibt aber dasselbe und somit der technische Aufwand relativ hoch.

Für den Betrieb von Peripheriegeräten, wie z. B. Drucker, Modems, etc., haben Signalverarbeitungssysteme einfach zu handhabende Busverbindungen, wie z. B. USB-, RS232-, Parallelport-, Ethernet- und V.24-Busverbindungen.

Im Stand der Technik sind Ansätze bekannt, um TFT-LCD-Bildschirme über die RS232-Schnittstelle oder die Ethernet-Schnittstelle eines Computers anzusteuern. Hier müssen aber "intelligente" Steuerungsschaltungen zwischen den Computer und den TFT-LCD-Bildschirm geschaltet sein oder in dem TFT-LCD-Bildschirm enthalten sein, da über die genannten Schnittstellen keine Bilddaten in Form von Pixeln erhalten werden, sondern so genannte Bildbeschreibungsdaten in Form ausgewählter Steuerbefehle. Die Steuerungsschaltung muss diese Steuerbefehle decodieren und ferner geeignete Schaltungen aufweisen, um basierend auf diesen Steuerbefehlen die erforderlichen Bilddaten in Form von Pixeln zur Anzeige auf dem TFT-LCD-Bildschirm zu erzeugen. Die Steuerschaltung umfasst z. B. einen Zeichengenerator, der aufgrund der empfangenen Steuerbefehle ein anzuzeigendes Zeichen erzeugt und auf dem TFT-LCD-Bildschirm anzeigt. Bei diesen Systemen werden über den RS232-Bus lediglich die Steuersignale übertragen, die dann unter Verwendung einer vordefinierten Graphikfunktionalität in Bilder umgesetzt werden (Kreis, Linien, Rechtecke, etc.). Die Graphikfunktionalität ist daher stark eingeschränkt. Für die Übertragung und Darstellung echter Bilder (z.B. Fotos), die vom Computer gesendet werden, sind diese Systeme nicht gut geeignet.

Der gerade beschriebene Ansatz ist nachteilhaft, da hier von einem Host-Rechner nur Steuersignale übertragen werden, die von der Anzeigensteuerung (Display-Controller) erst in Bilddaten umgewandelt werden, so dass eine bestimmte Rechenleistung vorausgesetzt werden muss, die beispielsweise von kostengünstigen MCUs (Micro Controller Units) nur schwer bereitgestellt werden kann.

Eine einfache Möglichkeit, einen TFT-LCD-Bildschirm über die oben genannten Schnittstellen zu betreiben, so dass Bilddaten an denselben übertragen werden, existieren nicht. Sollen TFT-LCD-Bildschirme mit dem genannten Computer über eine der genannten Schnittstellen betrieben werden, so muss dieser Computer über die betreffende Schnittstelle mit einem zweiten Computer verbunden werden, wobei der TFT-LCD-Bildschirm dann aber auf herkömmliche Weise (Graphikkarte) mit diesem zweiten Computer verbunden ist. Allein der damit verbundene Aufwand spricht gegen eine solche Lösung.

Zur Anzeige von Informationen, beispielsweise Werbeinformationen in Banken, Kaufhäusern und Ähnlichem, sind Tafeln bekannt, auf denen entsprechende Werbeplakate befestigt werden. Eines oder mehrerer solcher Werbeplakate werden auf solchen Haltern angeordnet und in den entsprechenden Räumen des Unternehmens aufgestellt. Solche Systeme sind aufwendig und nicht flexibel. Vielmehr ist es erforderlich, bei einer Änderung der anzuzeigenden Informationen aufwendige, manuelle Prozesse durchzuführen, um die Informationsplakate abzunehmen, durch neue zu ersetzen, etc.

Eine Implementierung mit herkömmlichen, elektronischen Ansätzen ist aufgrund der oben beschriebenen Nachteile der im Stand der Technik bekannten Lösungen zur Ansteuerung von Bildschirmen ebenfalls aufwendig.

Der vorliegenden Erfindung liegt daher die Aufgabe zugrunde, ein vereinfachtes Mehrfachanzeigesystem zu schaffen, das eine vereinfachte und flexible Anzeige von mehreren, ggf. verschiedenen Informationsinhalten ermöglicht.

Diese Aufgabe wird durch ein Mehrfachanzeigesystem nach Anspruch 1 gelöst.

Die vorliegende Erfindung schafft ein Mehrfachanzeigesystem, mit einer Mehrzahl von Anzeigegeräten, wobei jedes der Anzeigegeräte eine serielle Schnittstelle zum Empfangen von Bilddaten umfasst, und wobei jedes der Mehrzahl von Anzeigegeräten ausgebildet ist, um die Bilddaten anzuzeigen, einer Steuerung mit einer seriellen Schnittstelle, wobei die Steuerung ausgebildet ist, um die Bilddaten für jedes der Mehrzahl von Anzeigegeräten bereitzustellen, und einem seriellen Bus, der die seriellen Schnittstellen der Anzeigegeräte und die serielle Schnittstelle der Steuerung verbindet.

Weiterbildungen der Erfindung sind in den Unteransprüchen definiert.

Ausführungsbeispiele der vorliegenden Erfindung werden nachfolgend unter Bezugnahme auf die beiliegenden Zeichnungen näher erläutert. Es zeigen:
- Fig. 1: eine schematische Darstellung eines Mehrfachanzeigesystems gemäß einem ersten Ausführungsbeispiel der Erfindung,
- Fig. 2: eine schematische Darstellung eines Mehrfachanzeigesystems gemäß einem zweiten Ausführungsbeispiel der Erfindung;
- Fig. 3(A) und (B): zwei Ausführungsformen eines Gehäuses zur Aufnahme des erfindungsgemäßen Mehrfachanzeigesystems;
- Fig. 4: ein Blockdiagramm eines Anzeigegeräts, wie es bei Ausführungsbeispielen des Mehrfachanzeigesystems verwendet werden kann;
- Fig. 5: ein Blockdiagramm der in Fig. 4 gezeigten elektronischen Baugruppe mit angeschlossenem Bildschirm; und
- Fig. 6: ein detailliertes Blockdiagramm der in Fig. 5 gezeigten elektronischen Baugruppe.

Bei der nachfolgenden Beschreibung der Ausführungsbeispiele der Erfindung werden in den Figuren gleiche oder gleichwirkende Elemente mit den gleichen Bezugszeichen versehen.

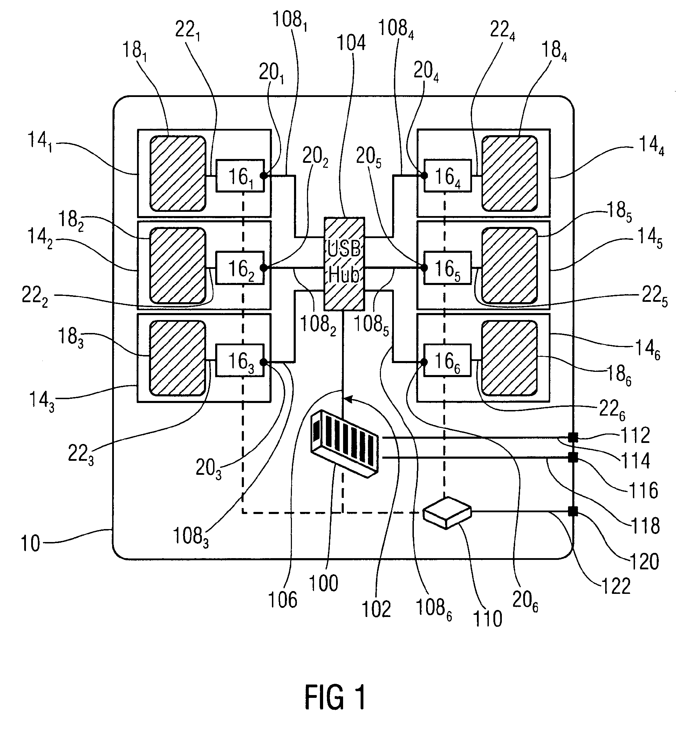

Fig. 1 zeigt eine schematische Darstellung eines Mehrfachanzeigesystems 10 gemäß einem ersten Ausführungsbeispiel der Erfindung. Das Mehrfachanzeigesystem 10 gemäß dem in Fig. 1 gezeigten Ausführungsbeispiel umfasst sechs Anzeigeeinrichtungen 14₁ bis 14₆, wobei jede der Anzeigeeinrichtungen 14₁ bis 14₆ eine elektronische Baugruppe 16₁ bis 16₆ und einen Bildschirm 18₁ bis 18₆ aufweist. Die elektronischen Baugruppen 16₁ bis 16₆ umfassen jeweils USB-Schnittstellen 20₁ bis 20₆. Ferner sind die elektronischen Baugruppen 16₁ bis 16₆ mit den jeweiligen Bildschirmen 18₁ bis 18₆ über die Verbindung 22₁ bis 22₆ verbunden.

Das Mehrfachanzeigesystem 10 umfasst eine zentrale Steuerung 100 sowie einen seriellen Bus 102 und einen USB-Hub (Verteiler) 104. Der serielle Bus 102 umfasst einen ersten Abschnitt 106, der eine serielle Schnittstelle der Steuerung 100 mit einem ersten Eingang des USB-Hub 104 verbindet. Ferner umfasst der serielle Bus 102 eine Mehrzahl von zweiten Abschnitten 108₁ bis 108₆, die eine Mehrzahl von zweiten Ausgängen des USB-Hub 104 mit den entsprechenden USB-Schnittstellen 20₁ bis 20₆ der Anzeigeeinrichtungen 14₁ bis 14₆ verbinden. Das Mehrfachanzeigesystem 10 umfasst ferner ein Netzteil 110, das mit den Anzeigeeinrichtungen 14₁ bis 14₆ und der Steuerung 100 wirksam verbunden ist, um diese Elemente mit Leistung zu versorgen, wie es in Fig. 1 durch die gestrichelten Verbindungslinien ausgehend von dem Netzteil 110 angedeutet ist.

Das Mehrfachanzeigesystem 10 umfasst eine externe, serielle Schnittstelle 112, die mit einer weiteren seriellen Schnittstelle der Steuerung 100 über eine serielle Verbindung 114 verbunden ist. Die externe serielle Schnittstelle 112 ist eine USB-Schnittstelle, an die ein USB-Stick oder ein Host-Computer angeschlossen werden kann. Ferner umfasst das Mehrfachanzeigesystem 10 einen externen Netzwerkanschluss 116, beispielsweise einen Ethernet-Anschluss, der über eine interne Netzwerkverbindung 118 mit einem Netzwerkanschluss der Steuerung 100 verbunden ist. An dieser Stelle sei darauf hingewiesen, dass der gerade erläuterte Netzwerkanschluss 116 optional ist, und das Anzeigesystem gemäß Fig. 1 arbeitet auch unabhängig von einer Netzwerkverbindung.

Zusätzlich ist der Anschluss 120 vorgesehen, der mit einem Netzkabel verbunden werden kann, um über die interne Leitung 122 das Netzteil mit der erforderlichen Leistung zum Betreiben des Systems zu versorgen.

Das in Fig. 1 gezeigte Mehrfachanzeigesystem 10 umfasst bei dem gezeigten Ausführungsbeispiel sechs Anzeigeeinrichtungen 14₁ bis 14₆, die hier alle gleiche Bildschirme 18₁ bis 18₆ aufweisen. Es sei darauf hingewiesen, dass die Erfindung nicht auf die in Fig. 1 gezeigte Konfiguration beschränkt ist. Vielmehr kann eine beliebige Anzahl von Anzeigeeinrichtungen vorgesehen sein, beispielsweise können zwei, vier oder sechs Anzeigeeinrichtungen in der Einheit 10 angeordnet sein. Alternativ können auch Anzeigeeinrichtungen 14 mit unterschiedlichen Bildschirmgrößen und unterschiedlicher Bildschirmausrichtung (horizontal oder vertikal) vorgesehen sein. Das Mehrfachanzeigesystem 10 kann wandhängend oder freistehend eingesetzt werden, vorzugsweise dort, wo Bildschirme zur Informationsdarstellung benötigt werden. Mittels einer einfach zu bedienenden Ansteuerungssoftware kann die Mehrfachanzeigesystem 10 von jedem Computer aus flexibel programmiert werden. Jedem Bildschirm 18₁ bis 18₆ der Anzeigeeinrichtungen 14₁ bis 14₆ kann individuell ein Standbild oder eine Abfolge von Standbildern als Bildershow zugeordnet werden, wobei die Darstellungsdauer für jedes Bild frei wählbar ist.

Für den Betrieb ist lediglich der Stromanschluss 120 erforderlich. Die Bildershow wird über eine USB-Verbindung oder über einen USB-Stick in die Steuerung 100 geladen. Der alternativ ggf. vorgesehene Netzwerkanschluss 116 kann vorgesehen werden, um Bildershows auch über ein Netzwerk direkt zu importieren.

Das in Fig. 1 gezeigte Mehrfachanzeigesystem umfasst beispielsweise sechs 12,1 Zoll TFT-Bildschirme, mit einer Auflösung von 800x600 Pixeln. Die Steuerung 100 hat eine Speicherkapazität von bis zu 200 Bildern, wobei die Bilder als Standbild oder mit einer Anzeigedauer zwischen 100 ms bis 24 Stunden angezeigt werden können.

Nach dem Einschalten bewirkt die Steuerung 100, dass das Mehrfachanzeigesystem 10 die zuletzt in die Steuerung 100 geladene Bildershow automatisch abspielt. Eine Netzwerkverbindung zu einem Server ist hierfür nicht erforderlich. Wird beispielsweise ein USB-Stick mit einer neuen Bildershow eingesteckt, so kopiert die Steuerung 100 diese neue Bildershow intern auf einen internen Flash-Speicher in der Steuerung 100, und startet automatisch die Anzeige.

Der Vorteil der in Fig. 1 gezeigten Anordnung besteht darin, dass das Mehrfachanzeigesystem 10 keine beweglichen Teile, wie Festplatten oder Lüfter aufweist, absolut wartungsfrei ist und keine Administration erfordert. Ein WIN-Betriebssystem ist ebenfalls nicht erforderlich, so dass entsprechende Systemaktualisierungen ebenfalls nicht erforderlich sind.

Da bei vielen Anwendungen eine einzelne Einheit zur Anzeige von Informationen nicht ausreichend ist, wird bei vielen Anwendungsfällen zur umfassenden Kundeninformation auf eine Mehrzahl von Bildschirmen 18₁ bis 18₆ zurückgegriffen. Solche Mehrfachanzeigesysteme werden beispielsweise bei Banken und Versicherungen, Immobilienmaklern, Hotels, Gaststätten und Kantinen verwendet, um Kundeninformationen und Werbung genau dort zu präsentieren, wo sie die größte Wirkung entfalten kann. Wie oben schon erwähnt, wird durch das erfindungsgemäße Mehrfachanzeigesystem eine deutlich verbesserte Flexibilität gegenüber herkömmlichen Ansätzen erreicht. Abhängig von den Anwendungsbedürfnissen können beispielsweise drei 26 Zoll-Bildschirme im Querformat oder, wie in Fig. 1 gezeigt ist, sechs 12,1 Zoll-Bildschirme 18₁ bis 18₆ im Hochformat realisiert werden.

Das Mehrfachanzeigesystem 10 lässt sich als mobile Einheit oder auch als Festinstallation in Geschäftsräumen oder Schaufenstern verwenden.

Ein Vorteil der vorliegenden Erfindung besteht darin, dass das erfindungsgemäße Mehrfachanzeigesystem 10 ohne Programmierung aufgebaut werden kann und sofort in Betrieb genommen werden kann.

Bei dem in Fig. 1 gezeigten Ausführungsbeispiel sind alle Anzeigeeinrichtungen 14₁ bis 14₆ über einen USB-Bus mit der Steuerung 100 verbunden und empfangen über diesen Bus die Bilddaten für eine Anzeige auf den entsprechenden Bildschirmen 18₁ bis 18₆.

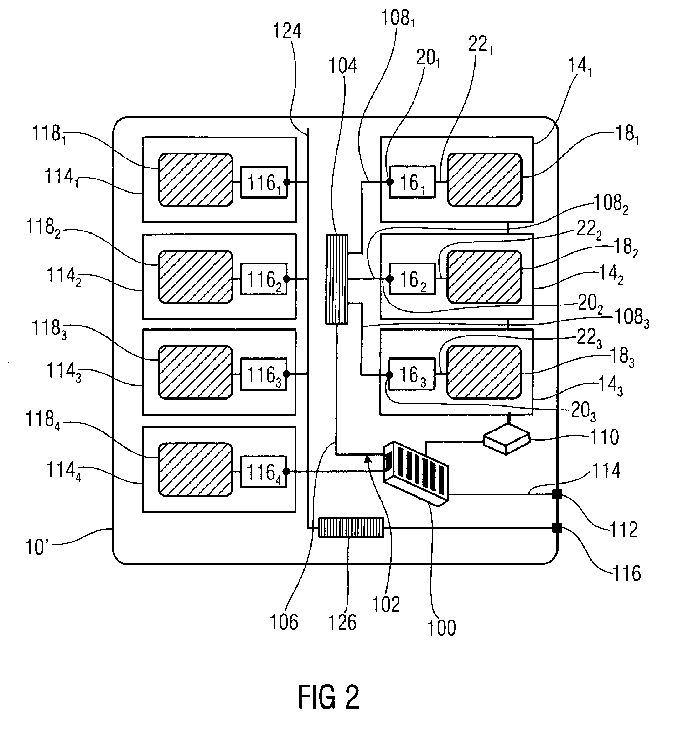

Die vorliegende Erfindung ist jedoch nicht auf eine solche Ausgestaltung beschränkt. Fig. 2 zeigt eine alternative Ausführungsform des erfindungsgemäßen Mehrfachanzeigesystems 10', bei dem zusätzlich zu Anzeigeeinrichtungen, die die Bilder über den USB-Bus erhalten, ferner Anzeigeeinrichtungen vorgesehen sind, die die Bilddaten über ein lokales Netzwerk erhalten.

In Fig. 2 ist das Mehrfachanzeigesystem 10' dargestellt, bei dem anstelle der in Fig. 1 gezeigten sechs Anzeigeeinrichtungen nur drei USB-Anzeigeeinrichtungen 14₁ bis 14₃ vorgesehen sind, die auf die oben, anhand der Fig. 1 beschriebene Art und Weise über den USB-Hub 104 mit der Steuerung 100 zur Anzeige von Bildern/Bildershows verbunden sind. Hinsichtlich der Funktionalität wird auf die obige Beschreibung der Fig. 1 verwiesen.

Zusätzlich umfasst das Mehrfachanzeigesystem 10' vier Netzwerkanzeigeeinheiten 114₁ bis 114₄, die jeweils elektronische Baugruppen 116₁ bis 116₄ und Bildschirme 118₁ bis 118₄ umfassen. Das Mehrfachanzeigesystem 10' umfasst ferner ein internes Netzwerk 124, das einen Netzwerkanschluss der Steuerung 100 und die Baugruppen 116₁ bis 116₄ der Netzwerkanzeigeeinrichtungen 114₁ bis 114₄ verbindet. Ferner ist ein Netzwerk-Switch 126 vorgesehen, der zwischen dem externen Netzwerkanschluss 116 und das interne Netzwerk 124 geschaltet ist.

Die elektronischen Baugruppen 116₁ bis 116₄ der Netzwerkanzeigeeinrichtungen 114₁ bis 114₄ dienen dazu, auf dem lokalen Netzwerk 124 bereitgestellte Bilddaten zu erhalten und für eine Anzeige auf den jeweiligen Bildschirmen 118₁ bis 118₄ aufzubereiten und an diese weiterzuleiten.

Bei dem in Fig. 2 gezeigten Ausführungsbeispiel werden für die Netzwerkanzeigeeinrichtungen 14₁ bis 14₄ großformatige Bildschirme verwendet, wobei diese Bildschirme entweder gemeinsam mit den kleineren Anzeigebildschirmen 18₁ bis 18₃ in einem gemeinsamen Gehäuse angeordnet sind, oder zusätzlich zu der gehäusten Anordnung der Anzeigebildschirm 16₁ bis 16₃ an externen Stellen vorgesehen sind. Bei dem in Fig. 2 gezeigten Beispiel sind vier großformatige Bildschirme 16₁ bis 16₄ über den entsprechenden Netzwerkanschluss mit einem LAN verbunden, und sind in einem Geschäft verteilt angeordnet. Ferner sind die drei kleineren Bildschirme 18₁ bis 18₃, die über die Steuerung 100 angesteuert werden, beispielsweise zur Kundeninformation in einem Eingangsbereich des Geschäftes in einem gemeinsamen Gehäuse angeordnet. Alle Bildschirme sind mit der Steuerung 100 verbunden, wobei alternativ über den Netzwerkschalter 126 ein Computer zur Ansteuerung verwendet werden kann.

Bei den oben beschriebenen Ausführungsbeispielen der erfindungsgemäßen Multianzeigesysteme kann eine beliebige Anzahl von Bildschirmen, vorzugsweise TFT-Bildschirme, mit unterschiedlichen Auflösungen ohne Client-Computer verwendet werden. Es sind keine fehlerhaften Client-Server-Architekturen mit komplizierter Softwareinstallation und aufwendiger Inbetriebnahme erforderlich. Auch die erforderlichen Investitionen in SBC/IPC-Hardware und Betriebssysteme entfallen. Erfindungsgemäß wird auf einfache Art und Weise ein Dauerbetrieb (7 Tage/24 Stunden) ohne jegliche Wartung und Administration ermöglicht. Die erfindungsgemäße Ausgestaltung des Mehrfachanzeigesystems unter Verwendung der Baugruppen 16₁ bis 16₆ und der Steuerung 100 ermöglichen eine kostengünstige, flexible und schnelle Anzeige für statische Bildinformationen oder zum Abspielen von Bildershows. Die Anzeigeeinrichtungen 14 werden direkt an den USB-Bus angeschlossen, ohne dass ein zusätzlicher Client-Computer erforderlich wäre. Auch eine Softwareinstallation ist nicht erforderlich. Die Abspiellisten können auf Standard-Computern unter Verwendung entsprechender Software programmiert werden, wobei jedem Bildschirm einzelne Bilder und deren Anzeigedauer zugeordnet werden kann. Für die Übertragung der Abspiellisten zu der Steuerung 100 wird entweder eine USB-Verbindung verwendet oder ein USB-Stick herangezogen. Nach dem Einstecken des USB-Sticks wird die neue Abspielliste kopiert und automatisch gestartet, wobei beim Abschalten die zuletzt gespeicherte Bildershow bzw. die zuletzt gespeicherten Bilder beibehalten werden.

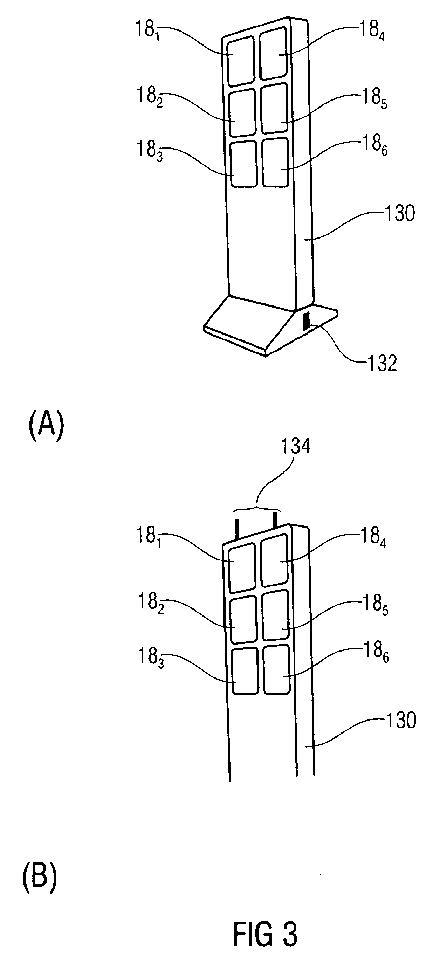

Anhand der Fig. 3 werden verschiedene Ausführungsformen eines Gehäuses beschrieben, in dem die Mehrfachanzeigeeinheit aufgenommen ist. Fig. 3(A) zeigt ein Gehäuse 130, in dem die Bildschirme 18₁ bis 18₆ in der gezeigten Anordnung vorgesehen sind. Das Gehäuse 130 umfasst ein Fußbauteil 132, so dass die in Fig. 3(A) gezeigte Einheit an einer beliebigen Position positioniert werden kann.

Fig. 3(B) zeigt eine Ausgestaltung des Gehäuses 130 mit Befestigungsmitteln 134, mittels denen das Gehäuse 130 hängend an einer Decke vorgesehen sein kann. Alternativ können die Befestigungsmittel 134 an der Rückseite des Gehäuses 130 für eine Wandbefestigung vorgesehen sein.

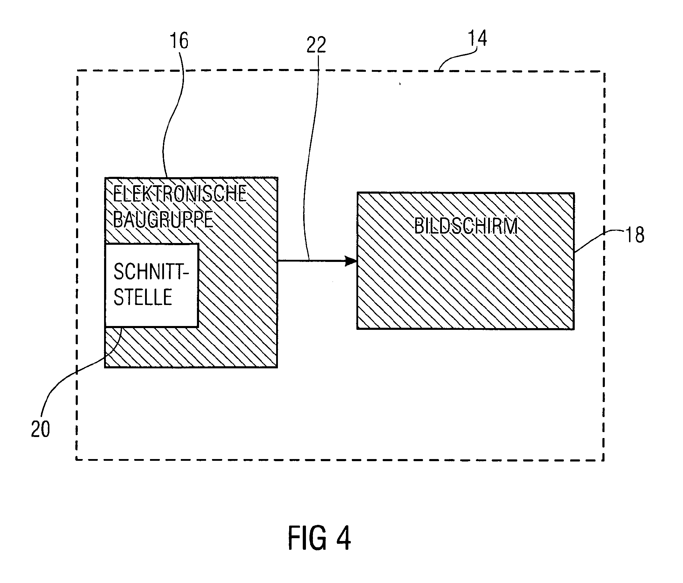

Anhand der Fig. 4 bis 6 erfolgt nachfolgend eine Beschreibung der Funktionalität der in den Fig. 1 und 2 gezeigten Anzeigeeinrichtungen 14₁ bis 14₆, die über den USB-Bus die anzuzeigenden Bilddaten von der Steuerung 100 empfangen.

Anhand der Fig. 4 wird nun ein Blockdiagramm eines Anzeigegeräts 14 beschrieben. Das in Fig. 4 gezeigte Anzeigegerät 14 umfasst eine elektronische Baugruppe 16 und einen Bildschirm 18, z. B. einen TFT-LCD-Bildschirm. Die elektronische Baugruppe 16 umfasst ferner eine Schnittstelle 20 und erzeugt aus den an der Schnittstelle 20 empfangenen Signalen/Daten ein Anzeigesignal für den Bildschirm 18. Das Anzeigesignal wird über eine Verbindung 22 von der elektronischen Baugruppe 16 an den Bildschirm 18 übertragen. Die auf dem Bildschirm 18 anzuzeigenden Bilddaten werden in Form von Pixeln, vorzugsweise in Form von Bitmaps, bereitgestellt, anschließend in ein Format entsprechend der Schnittstelle 20, die einem vorbestimmten Datenbuskonfiguration entspricht, umsetzt und an die Schnittstelle 20 übertragen. Die an der Schnittstelle 20 empfangenen Daten werden in der elektronischen Baugruppe 16 zum Erzeugen des Anzeigesignals verarbeitet. Die elektronische Baugruppe 16 extrahiert die Bilddaten aus dem entsprechenden Datenbusformat und erzeugt das Anzeigesignal für den Bildschirm 18, das über die Verbindung 22 an den Bildschirm gesendet wird. Das Datenbusformat zur Übertragung der Bilddaten und die Konfiguration der Schnittstelle entsprechen dem USB-Datenbusformat. Über die USB-Schnittstelle 20 wird von Seiten eine Grafik-Bitmap übertragen. Bei der hier gezeigten Lösung wird ein Format von 800 x 600 Bildpunkten (Pixeln) mit 16 Bit Farbtiefe verwendet. Selbstverständlich ist die vorliegende Erfindung nicht hierauf beschränkt und es können auch andere Formate verwendet werden. Die Grafik-Bitmap ist somit ein binäres Datenformat von 800x600x16 Bit.

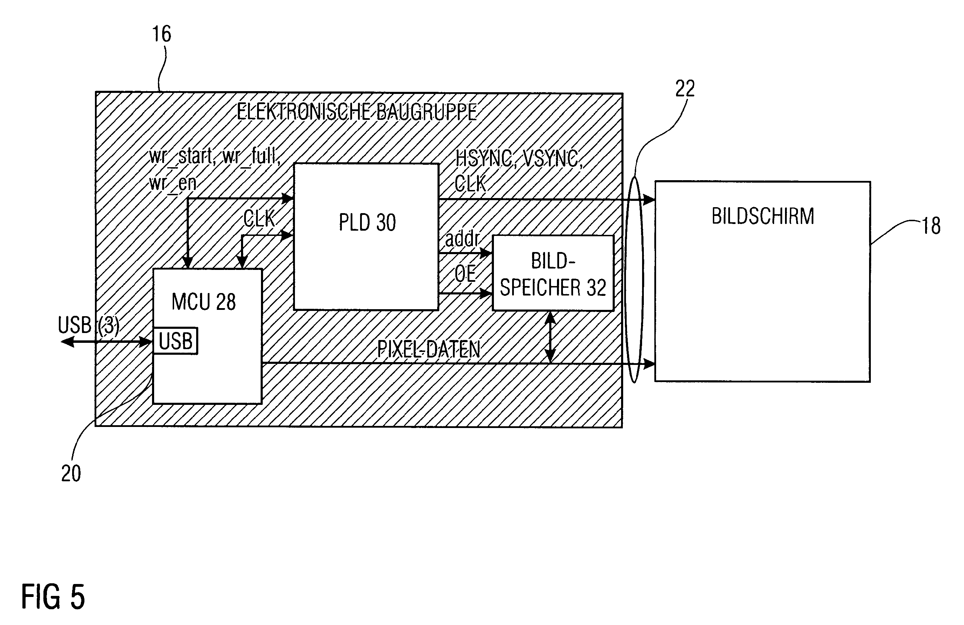

Fig. 5 zeigt ein Blockdiagramm der in Fig. 4 gezeigten elektronischen Baugruppe 16 mit angeschlossenem Bildschirm 18. Die elektronische Baugruppe 16 umfasst eine Steuerung 28 (MCU), die die USB-Schnittstelle 20 umfasst. Ferner umfasst die elektronische Baugruppe 16 eine Zeitgebungseinrichtung 30 (PLD = Programmable Logic Device = programmierbares Logikeinrichtung oder -element) und einen Bildspeicher 32, vorzugsweise ein RAM-Speicher (RAM = Random Access Memory = Speicher mit wahlfreiem Zugriff). Wie in Fig. 5 zu erkennen ist, sind die einzelnen Komponenten der elektronischen Baugruppe 16 über eine Mehrzahl von Leitungen zum Datenaustausch verbunden. Genauer gesagt tauschen die MCU 28 und die PLD 30 die Signale WR_START, WR_FULL und WR_EN über je eine Leitung aus, und über eine andere Leitung das Taktsignal CLK. Die MCU 28 ist ferner über einen Datenbus, der die Pixeldaten trägt, mit dem Bildspeicher 32 und dem Bildschirm 18 verbunden. Die PLD 30 stellt dem Bildspeicher 32 die Signale OE und addr bereit, und dem Bildschirm 18 die Signale HSYNC und VSYNC sowie das Taktsignal CLK. Wie zu erkennen ist, werden die Signale HSYNC, VSYNC, CLK und die Pixeldaten über die gemeinsame Verbindung 22 übertragen.

Die elektronische Baugruppe 16 besteht im wesentlichem aus zwei Teilen, der MCU 28 (Micro-Controller-Unit) und der Zeitgebungseinrichtung 30 (Timing-Engine), die hier vorzugsweise durch die PLD implementiert ist.

Die MCU 28 ist hauptsächlich für den Datentransport zu der elektronischen Baugruppe 16 zuständig. Die PDL 30 generiert hauptsächlich die Synchronsignale HSYNC (horizontale Synchronisation), VSYNC (vertikale Synchronisation) für den Bildschirm 18 und die Adress-Signale addr für den Bildspeicher 32. Die MCU 28 ist mit der USB-Schnittstelle 20 ausgestattet, über die die anzuzeigenden Grafik-Bitmap-Daten an die elektronische Baugruppe 16 übertragen werden. Die Daten werden dann in den Bildspeicher 32 weitergeleitet.

Da der Bildschirm 18, der Bildspeicher 32 und die MCU 28 einen gemeinsamen Datenbus haben, muss der Zugriff auf diese Element gesteuert werden. Der Ausgang des Bildspeichers 32 wird hierzu im Zeitraum der fallenden Flanke des Taktsignals CLK und der Ausgang der MCU 28 im Zeitraum der steigenden Flanke des Taktsignals CLK freigeschalten.

Die Helligkeitsregelung des Bildschirms 18 wird durch das PWM-Verfahren (PWM = Pulsweitenmodulation) bewerkstelligt. Hierfür sind zwei, in der MCU 28 integrierte "Auto Reload Timer" (Zeitgeber) im Einsatz. Über die PLD 30 wird abwechselnd jeweils ein Zeitgeber für die "High-Phase" (hoher logischer Regel) und der andere für die "Low-Phase" (niedriger logischer Regel) des PWM-Signals aktiviert. Mit den Signalen, die die Zeitgeber beim Ablauf eines Intervalls generieren, toggelt die PLD 30 das PWM-Signal, wie dies später noch näher erläutert wird.

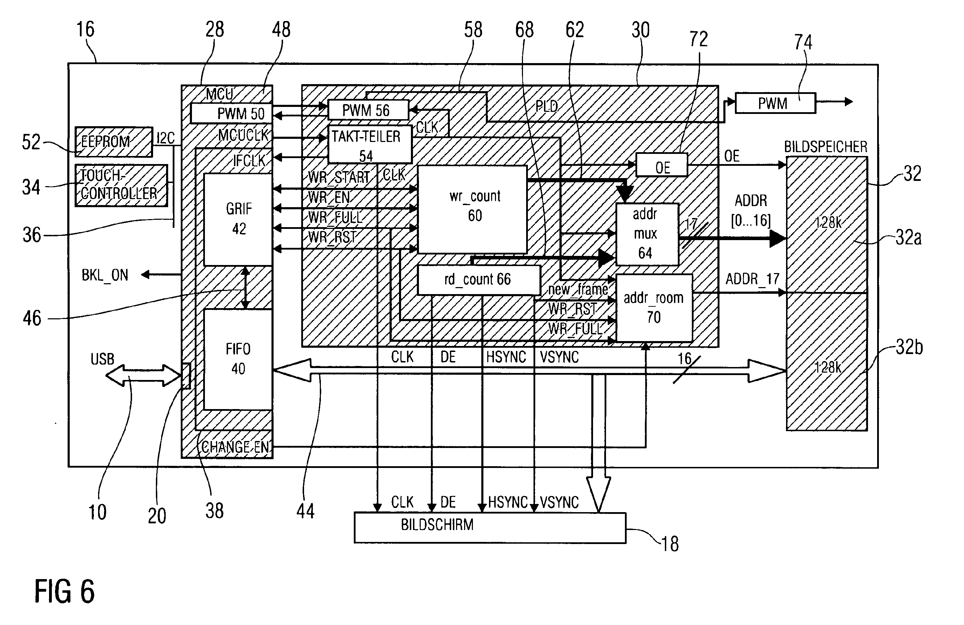

Anhand der Fig. 6 wird nun ein detailliertes Blockdiagramm eines bevorzugten Ausführungsbeispiels der in Fig. 5 gezeigten elektronischen Baugruppe und hier insbesondere der MCU 28, der PLD 30 und des Bildspeichers 32 näher beschrieben.

Die MCU 28 umfasst neben der USB-Schnittstelle einen Datentransferabschnitt 38, der einen FIFO-Speicher 40 (FIFO = Fist-In-Fist-Out) und eine Mehrzweck-Schnittstelle 42 (GPIF = General Purpose Interface) aufweist. Wie zu erkennen ist, gibt die GPIF 42 die Signale WR_START und WR_EN an die PLD 30 aus, empfängt von derselben das Signal WR_FULL und tauscht mit derselben das Signal WR RST aus. Der FIFO-Speicher 40 ist über den 16 Bit Datenbus 44 mit dem Bildspeicher 32 und dem Bildschirm 18 zur Übertragung der Pixeldaten verbunden. Der FIFO-Speicher 40 und die GPIF 42 sind über eine Verbindung 46 verbunden. Der Datentransferabschnitt 38 der MCU 28 empfängt ferner von der PLD 30 einen Schnittstellentakt IFCLK.

Die MCU 28 umfasst einen weiteren Abschnitt 48, in dem die nicht gezeigte CPU der MCU 28 angeordnet ist. In dem weiteren Abschnitt 48 ist eine Zeitgeber/PWM-Schaltung 50 angeordnet, die an die PLD 30 Signale bereitstellt und von derselben empfängt. Ferner wird der MCU-Takt MCUCLK an die PLD 28 bereitgestellt, ebenso wie das Signal CHANGE_EN. Ferner wird das Signal BKL ON erzeugt und ausgeben. Das Signal BKL_ON schaltet die Hintergrundbeleuchtung des TFT-LCD-Bildschirms an oder aus, was über einen USB-VENDOR-CALL gesteuert wird. Von der Anwendungs/Applikations-Seite aus wird dieser USB-VENDOR-CALL über die treiberseitige Funktion IOCTL() ausgelöst. Die MCU 28 ist über den seriellen Bus 36 mit der Touchscreensteuerung 34 und einem Speicher 52 (vorzugsweise ein EEPROM), in dem die MCU-Firmware abgelegt ist, verbunden.

Die PLD 30 umfasst einen Taktteiler 54, der von der MCU 28 den MCU-Takt MCUCLK empfängt und an den Datentransferabschnitt 38 der MCU 28 den Schnittstellentakt IFCLK ausgibt. Ferner gibt der Taktteiler 54 das Taktsignal CLK aus.

Eine PWM-Schaltung 56 ist vorgesehen, die das Taktsignal CLK empfängt und an die Zeitgeber/PWM-Schaltung 50 der MCU 28 Signale bereitstellt und von derselben empfängt. Ferner stellt die PWM-Schaltung 56 ein Steuersignal auf der Leitung 58 bereit.

Ein erster Zähler 60 (wr_count) empfängt von der MCU 28 die Signale WR_START und WR_EN. Er gibt an die MCU 28 das Signal WR_FULL aus. Ferner tauscht der erste Zähler 60 das Signal WR_RST mit der MCU 28 aus. Von dem Taktteiler 54 empfängt der erste Zähler 60 das Taktsignal CLK. Über einen ersten Bus 62 gibt der erste Zähler 60 seinen Zählwert an einen Adressenmulitplexer 64 (addrmux), der ferner einen Zählwert eines zweiten Zählers 66 über einen zweiten Bus 68 empfängt. Über einen 17 Bit Bus gibt der Adressenmultiplexer 64 das Adresssignal ADDR[0..16] an den Bildspeicher 32 aus. Der Adressenmultiplexer 64 empfängt ferner das Taktsignal CLK von dem Taktteiler 54.

Der zweite Zähler 66 empfängt das Taktsignal CLK von dem Taktteiler 54 und gibt neben dem Zählwert die Signale DE, HSYNC und VSYNC an den Bildschirm 18 aus. Das Signal VSYNC wird ferner als Signal new_frame (neuer Rahmen) an eine Adressraum-Auswahlschaltung 70 angelegt, die ferner das Signal WR_FULL empfängt und das Signal WR_RST sendet. Die Adressraum-Auswahlschaltung 70 gibt ein Auswahlsignal ADDR_17 an den Bildspeicher 32 aus und empfängt ferner das Taktsignal CLK von dem Taktteiler 54.

Die PLD 30 umfasst ferner die Schaltung 72 (OE) zum Erzeugen eines Aktivierungssignals OE für den Bildspeicher 32, abhängig von dem empfangenen Taktsignal CLK.

Die elektronische Baugruppe 16 umfasst ferner die PWM-Schaltung 74, die von der PWM-Schaltung 56 der PDL 30 über die Leitung 58 angesteuert wird, um ein Helligkeitssignal zu erzeugen.

Der Bildspeicher 32 hat zwei Speicherabschnitte 32a und 32b, die abwechselnd Pixeldaten von der MCU 28 empfangen und an den Bildschirm 18 ausgeben.

Die MCU 28 regelt den Transfer der Grafik-Bitmap-Daten in den Bildspeicher 32. Der eigentliche Datentransfer wird mit der in der MCU 28 integrierten GPIF-Einheit 42 weitgehend autark vom der integrierten CPU bewerkstelligt. Die GPIF-Einheit 42 ist eine Zustandsmaschine (Statemachine), die einen DMA Datentransfer vom dem ebenfalls in der MCU 28 integrierten FIFO-Speicher 40 in den Bildspeicher 32 steuert. Die GPIF 42 verfügt dafür über einen Zähler der mit der Zahl der zu übertragenden Daten gefüllt wird, also die Anzahl der Pixel einer kompletten Bitmap. Der Zähler wird durch einen USB-Vendor-Aufruf (Call) "WR_START" gesetzt. Zudem wird die GPIF 42 initialisiert. Der Aufruf WR_START setzt auch das Signal WR_START, um den Adresszähler 60 in der PLD 30 auf die Speicher-Start-Position/Adresse eines Bildes zu setzten.

Die von dem USB-Bus ankommenden Bitmap-Daten werden in dem FIFO-Speicher 40 abgelegt. Dies bewerkstelligt eine in der MCU 28 integrierte SIE-Einheit (nicht gezeigt; SIE = USB Serial Interface Engine) automatisch. Die GPIF 42 erkennt, dass Daten im FIFO-Speicher 40 zur Verfügung stehen und überträgt diese selbstständig an den Bildspeicher 32.

Die Adressierung des Speichers erfolgt durch die PDL 30. Legt die GPIF 42 gültige Pixel-Daten auf den Datenbus 44, so wird dies durch das Signal WR_EN anzeigt. Die Daten werden mit der steigenden Flanke des Taktsignals CLK im Bildspeicher 32 übernommen. Für jedes übertragene Pixel wird der Zähler der GPIF 42 dekrementiert. Ist ein komplettes Bild übertragen, wird in der MCU 28 eine Unterbrechung (Interrupt) durch das Signal WR_FULL aus der PLD 30 ausgelöst. Die dadurch in der MCU 28 gestartete ISR (Interrupt Service Routine) überprüft den Zählerstand der GPIF 42. Ist dieser "NULL", zeigt dies einen erfolgreichen Transfer an. Damit ist ein komplettes neues Bild im Bildspeicher 32 abgelegt. Dies wird mit dem Signal CHANGE_EN durch die MCU 28 angezeigt. Dadurch wechselt die Adressraum-Auswahlschaltung 70 der PLD 30 den Adressraum zum nächstmöglichen Zeitpunkt, nämlich zum Zeitpunkt der Vertikalaustastlücke, und das neue Bild wird angezeigt. Wechselt die PLD 30 den Adressraum, so setzt dieselbe den ersten Zähler 60 und damit das Signal WR_FULL zurück. Dies wird mit dem Signal WR_RST angezeigt und löst wiederum eine Unterbrechung (Interrupt) in der MCU 28 aus. Die dadurch gestartete ISR setzt das Signal CHANGE_EN wieder zurück, setzt den Zähler der GPIF 42 wieder auf die Pixelzahl eines kompletten Bildes und startet die GPIF 42 für einen erneuten Datentransfer. Zudem wird der Steuerung (siehe Fig. 1 und 2) der erfolgreiche Datentransfer über einen USB-Interrupt-Transfer mitgeteilt.

Wird das Signal WR_FULL angezeigt und erkennt die damit ausgelöste ISR, dass der Zähler der GPIF 42 nicht "NULL" ist, liegt ein Fehlverhalten vor. Dies wird durch einen USB-Interrupt-Transfer der Steuerung 100 mitgeteilt. Die Steuerung 100 muss dann über den USB-Vendor-Call "WR_START" das System zurücksetzten und den Datentransfer neu starten.

Ein weiteres Fehlverhalten liegt vor wenn der Zähler der GPIF 42 auf "NULL" läuft, aber das Signal WR_FULL von der PLD 30 nicht gesetzt wird. Läuft die GPIF dann auf "NULL" wird ein Interrupt in der MCU 28 ausgelöst. Dieser ist niedriger priorisiert als der Interrupt durch das Signal WR_FULL. Deshalb wird im Normalfall der Interrupt "GPIF-Zähler NULL" durch die "ISR MR_FULL" ausmaskiert und löst damit nicht die ISR "GPIF-Zähler NULL" aus. Bei einem Fehlverhalten wird die ISR "GPIF-Zähler NULL" aber aktiviert, da kein Signal WR_FULL anliegt, um das Fehlverhalten anzeigen. Dies wird durch einen USB-Interrupt-Transfer der Steuerung 100 mitgeteilt. Die Steuerung 100 muss dann über den USB-Vendor-Call "WR_START" das System zurücksetzten und den Datentransfer neu starten.

Bei der obigen Beschreibung wurde die Übertragung der Bilddaten ohne Komprimierung beschrieben. Ist die Datenmenge jedoch groß, so können die Bilddaten vor der Übertragung über den seriellen Bus mittels bekannter Techniken komprimiert werden, d.h. es werden nur Content-Änderungen (Inhaltsänderungen) übertragen.

Anstelle der oben beschriebenen Verwendung des USB-Formats können auch andere, bekannte serielle Schnittstellenformate für die Übertragung der Bilddaten zwischen den Anzeigeeinrichtungen 14 und der Steuerung 100 verwendet werden.

Die obige Beschreibung der bevorzugten Ausführungsbeispiele erfolgte anhand von Mehrfachanzeigen, die Bilder oder Bildershows bzw. Einzelbilder oder eine Abfolge von Standbildern als Bildershow anzeigen. Die erfindungsgemäße Mehrfachanzeige ist nicht auf eine solche Ausgestaltung beschränkt. Vielmehr können anstelle der Bilder auch Videos auf den Anzeigegeräten (auch verschiedene Videos auf den unterschiedlichen Anzeigegeräten) angezeigt werden. Die Videos können z.B. im MPEG2/4-Format bereitgestellt werden.

## Patentansprüche

1. Mehrfachanzeigesystem, mit:
einer Mehrzahl von Anzeigegeräten (14₁-14₆), wobei jedes der Mehrzahl von Anzeigegeräten (14₁-14₆) eine serielle Schnittstelle (20₁-20₆) zum Empfangen von Bilddaten umfasst, und wobei jedes der Mehrzahl von Anzeigegeräten (14₁-14₆) ausgebildet ist, um die Bilddaten anzuzeigen;
einer Steuerung (100) mit einer seriellen Schnittstelle, wobei die Steuerung (100) ausgebildet ist, um die Bilddaten für jede der Mehrzahl von Anzeigegeräten (14₁-14₆) bereitzustellen; und
einem seriellen Bus (102, 106, 108₁-108₆), der die seriellen Schnittstellen (20₁-20₆) der Anzeigegeräte (14₁-14₆) und die serielle Schnittstelle der Steuerung (100) verbindet.

2. Mehrfachanzeigesystem nach Anspruch 1, mit:
einem Verteiler (104) mit einer ersten seriellen Schnittstelle und einer Mehrzahl von zweiten seriellen Schnittstellen, wobei der Verteiler (104) ausgebildet ist, um Bilddaten an der ersten seriellen Schnittstelle selektiv an die zweiten seriellen Schnittstellen bereitzustellen,
wobei der serielle Bus (102) einen ersten Abschnitt (106) und eine Mehrzahl von zweiten Abschnitten (108₁-108₆) umfasst,
wobei der erste Abschnitt (106) des seriellen Busses (102) die serielle Schnittstelle der Steuerung (100) und die erste Schnittstelle des Verteilers (104) verbindet, und
wobei die zweiten Abschnitte (108₁-108₆) des seriellen Busses (102) jeweils eine der zweiten seriellen Schnittstellen des Verteilers (104) und die serielle Schnittstelle (20₁-20₆) eines der Anzeigegeräte (14₁-14₆) verbinden.

3. Mehrfachanzeigesystem nach Anspruch 1 oder 2, mit:
einer externen seriellen Schnittstelle (112) zum Empfangen von Bilddaten von einer externen Quelle; und
einem weiteren seriellen Bus (114), der die serielle Schnittstelle der Steuerung (100) und die externe serielle Schnittstelle (112) verbindet.

4. Mehrfachanzeigesystem nach einem der Ansprüche 1 bis 3, mit:
einem externen Netzwerkanschluss (116) zum Empfangen von Bilddaten von einer externen Quelle,
wobei die Steuerung (100) einen Netzwerkanschluss umfasst, der mit dem externen Netzwerkanschluss (116) verbunden ist.

5. Mehrfachanzeigesystem nach einem der Ansprüche 1 bis 4, mit:
zumindest einem weiteren Anzeigegerät (14₁-14₄) mit einer Netzwerkschnittstelle (116₁-116₄) zum Empfangen von Bilddaten und zum Anzeigen der Bilddaten, wobei die Steuerung (100) eine Netzwerkschnittstelle umfasst; und
einem Netzwerk (124), das die Netzwerkschnittstelle (116₁-116₄) des zumindest einen weiteren Anzeigegeräts (116₁-116₄) und die Netzwerkschnittstelle der Steuerung (100) verbindet.

6. Mehrfachanzeigesystem nach Anspruch 5, mit:
einer externen Netzwerkschnittstelle (116) zum Empfangen von Bilddaten von einer externen Quelle; und
einem Netzwerk-Switch (126), der zwischen die externe Netzwerkschnittstelle (116) und das Netzwerk (124) geschaltet ist.

7. Mehrfachanzeigesystem nach einem der Ansprüche 1 bis 6, mit:
einem gemeinsamen Netzteil (110), das die Steuerung (100) und die Anzeigegeräte (14₁-14₆) mit Leistung versorgt.

8. Mehrfachanzeigesystem nach einem der Ansprüche 1 bis 7, mit:
einem Gehäuse (130), das die Steuerung (100) und die Anzeigegeräte (14₁-14₆) aufnimmt.

9. Mehrfachanzeigesystem nach Anspruch 8, bei dem das Gehäuse (130) ein Fußteil (132) für eine stehende Aufstellung oder Befestigungsmittel (134) für eine hängende Aufstellung umfasst.

10. Mehrfachanzeigesystem nach einem der Ansprüche 1 bis 9, bei dem jedes der Mehrzahl von Anzeigegeräten (14₁-14₆) eine elektronische Baugruppe (116₁-116₆) umfasst, die ausgebildet ist, um die Bilddaten aus den über den seriellen Bus (102) empfangenen Daten zu extrahieren, die extrahierten Bilddaten in einem Bildspeicher (32) zu speichern und die gespeicherten Bilddaten unter Steuerung der elektronischen Baugruppe (116₁-116₆) anzuzeigen.

11. Mehrfachanzeigesystem nach Anspruch 10, bei dem die elektronische Baugruppe (116₁-116₆) ausgebildet ist, um eine vorbestimmte Menge von Bilddaten in dem Bildspeicher (32) zu sammeln und um die Bilddaten bei Erreichen der vorbestimmten Menge anzuzeigen.

12. Mehrfachanzeigesystem nach Anspruch 10 oder 11, bei dem jedes der Mehrzahl von Anzeigegeräten (14₁-14₆) eine erste Auflösung in horizontaler Richtung und eine zweite Auflösung in vertikaler Richtung aufweist, und bei dem der Bildspeicher (32) eine Mehrzahl von Zeilenabschnitten aufweist, wobei die Größe der Zeilenabschnitte der horizontalen Auflösung des Anzeigegeräts (108₁-108₆) entspricht, und wobei die Anzahl der Zeilenabschnitte der vertikalen Auflösung des Anzeigegeräts (108₁-108₆) entspricht.

13. Mehrfachanzeigesystem nach Anspruch 12, bei dem der Bildspeicher (32) einen ersten Speicherabschnitt (32a) und einen zweiten Speicherabschnitt (32b) umfasst, wobei der erste/zweite Speicherabschnitt (32a, 32b) konfiguriert ist, um Pixeldaten zu empfangen, während der zweite/erste Speicherabschnitt (32a, 32b) Pixeldaten zur Anzeige bereitstellt.

14. Mehrfachanzeigesystem nach einem der Ansprüche 10 bis 13, bei dem die Bilddaten komprimierte Bilddaten sind, und bei der die elektronische Baugruppe (116₁-116₆) ausgebildet ist, um die Bilddaten zu dekomprimieren.

15. Vorrichtung nach einem der Ansprüche 1 bis 14, bei dem die seriellen Schnittstellen USB-Schnittstellen sind.
